# EUROPEAN PATENT SPECIFICATION

(11) **EP 2 953 322 B1**
(45) Date of publication and mention of the grant of the patent: **24.02.2021**
(21) Application number: 15250009.6
(22) Date of filing: 02.06.2015
(51) Int. Cl.: H04W 12/00, H04L 29/06, H04W 12/04, H04L 12/58

(54) **SYSTEM AND METHOD FOR INITIATING PROTECTED INSTANT MESSAGING CONVERSATIONS**
SYSTEM UND VERFAHREN ZUR INITIIERUNG GESCHÜTZTER SOFORTNACHRICHTENKONVERSATIONEN
SYSTÈME ET PROCÉDÉ POUR LANCER DES CONVERSATIONS DE MESSAGERIE INSTANTANÉE PROTÉGÉES

(30) Priority: 02.06.2014 US 201414294065
(43) Date of publication of application: 09.12.2015
(73) Proprietor: BlackBerry Limited, Waterloo, ON N2K 0A7 (CA)
(72) Inventor: Keetch, Thomas William, London, SE10 8PD (GB); Brander, Ryan Conrad, Nova Scotia, B4G 1C5 (CA)
(74) Representative: MERH-IP Matias Erny Reichl Hoffmann Patentanwälte PartG mbB

(56) References cited:
- WO-A1-2009/054807
- US-A1- 2006 090 067
- Roger Younglove: "Virtual private networks- how they work", Computing & Control Engineering Journal (Volume:11 , Issue: 6 ), 1 December 2000 (2000-12-01), XP055220462, DOI: 10.1049/cce:20000602 Retrieved from the Internet: URL:http://ieeexplore.ieee.org/ielx5/2218/ 19324/00892887.pdf?tp=&arnumber=892887&isn umber=19324 [retrieved on 2015-10-13]
- Anonymous: "Threema: Alternative to WhatsApp with end-to-end encryption", , 25 July 2013 (2013-07-25), XP055220259, Retrieved from the Internet: URL:http://blog.botfrei.de/2013/07/threema -alternative-to-whatsapp-with-end-to-end-e ncryption/ [retrieved on 2015-10-13]
- Douglas Crawford: "Secure Instant Messaging with Pidgin plus OTR | Best VPN.com", www.bestvpn.com, 26 July 2013 (2013-07-26), XP055220530, Retrieved from the Internet: URL:https://www.bestvpn.com/blog/7188/secu re-instant-messaging-with-pidgin-plus-otr/ [retrieved on 2015-10-13]
- RYAN STEDMAN ET AL: "A user study of off-the-record messaging", PROCEEDINGS OF THE 4TH SYMPOSIUM ON USABLE PRIVACY AND SECURITY, SOUPS '08, 23 July 2008 (2008-07-23), page 95, XP055220179, New York, New York, USA DOI: 10.1145/1408664.1408678 ISBN: 978-1-60558-276-4
- Anonymous: "Off-the-Record Messaging: Authentication", , 4 September 2012 (2012-09-04), XP055220846, Retrieved from the Internet: URL:https://otr.cypherpunks.ca/help/4.0.0/ authenticate.php [retrieved on 2015-10-14]
- Anonymous: "Off-the-Record Messaging - News", , 14 October 2014 (2014-10-14), XP055220849, Retrieved from the Internet: URL:https://otr.cypherpunks.ca/news.php [retrieved on 2015-10-14]

## Description

### TECHNICAL FIELD

The following relates to systems and methods for initiating protected instant messaging (IM) conversations.

### DESCRIPTION OF THE RELATED ART

Incorporating at least some data security into electronic communications is paramount for many organizations, particularly in regulated industries and industries in which the nature of the content of such electronic communications is sensitive or confidential.

While data security can be applied in order to provide encryption and authentication, many electronic devices are vulnerable to various attacks, either due to inadequate or lack of security.

"Secure Instant Messaging with Pidgin plus OTR" by Crawford relates to an encryption and authentication process.

### BRIEF DESCRIPTION OF THE DRAWINGS

Embodiments will now be described by way of example only with reference to the appended drawings wherein:
FIG. 1 is a schematic diagram illustrating messaging between mobile devices in accordance with various example policy types;
FIG. 2 is a schematic diagram illustrating IM security applied at a first policy level;
FIG. 3 is a schematic diagram illustrating IM security applied at a second policy level which is considered more secure than the first policy level shown in FIG. 2;
FIG. 4 is a flow chart illustrating a key exchange protocol between two mobile devices;
FIG. 5 is a flow chart illustrating computer executable operations that may be performed in encrypting an IM under the second policy level illustrated in FIG. 3;
FIG. 6 is a flow chart illustrating computer executable operations that may be performed in decrypting an IM under the second policy level illustrated in FIG. 3;
FIG. 7 is a schematic diagram illustrating an enterprise environment;
FIG. 8 is a block diagram illustrating an example of a configuration for a mobile device having an IM application;
FIG. 9 is a screen shot of an example of a graphical user interface for a protected IM conversation;
FIG. 10 is a screen shot of an example of a graphical user interface for a default IM conversation;
FIG. 11 illustrates a series of enlarged views of an input field for a protected IM conversation;
FIG. 12 is an enlarged view of an input field for a protected IM conversation including a status notification;
FIG. 13 is an enlarged view of an input field for a protected IM conversation including a status notification indicating that the IM application is awaiting a pass phrase;
FIG. 14 is a screen shot of an example of a graphical user interface for a conversation list user interface;
FIG. 15 is a screen shot of an example of a graphical user interface for an IM conversation displaying a pass phrase entry dialog;
FIG. 16 is a screen shot of an example of a graphical user interface for a an IM conversation displaying a contact address selection dialog;
FIG. 17A is a screen shot of an example of a graphical user interface for a message composition user interface including a pass phrase;
FIG. 17B is a screen shot of an example of a graphical user interface for a message composition user interface including a challenge question;
FIG. 17C is a screen shot of an example of a graphical user interface displaying a quick response (QR) code representing a shared secret;
FIG. 18 is a screen shot of an example of a graphical user interface for a protected IM conversation pending confirmation of a pass phrase sent to a contact;
FIG. 19 is a screen shot of an example of a graphical user interface for a protected IM conversation pending confirmation of a pass phrase subsequent to a failed delivery attempt;
FIG. 20 is a screen shot of an example of a graphical user interface for a sender conversation list user interface illustrating a pending pass phrase notification;
FIG. 21 is a screen shot of an example of a graphical user interface for a conversation list user interface illustrating a confirmed pass phrase notification;
FIG. 22 is a screen shot of an example of a graphical user interface for a protected IM conversation pending confirmation of a pass phrase sent to a contact illustrating a follow up status notification;
FIG. 23 is a screen shot of an example of a graphical user interface for a recipient conversation list user interface illustrating a pending pass phrase notification;
FIG. 24 is a screen shot of an example of a graphical user interface for an IM conversation for a recipient displaying a pass phrase entry dialog;
FIG. 25 is a screen shot of an example of a graphical user interface for an IM conversation for a recipient displaying a populated pass phrase entry dialog;
FIG. 26 is a screen shot of an example of a graphical user interface for an out-of-band message including an invitation to begin chatting in a protected IM conversation;
FIG. 27 is a screen shot of an example of a graphical user interface for a protected IM conversation subsequent to a successful pass phrase entry;
FIG. 28 is a screen shot of an example of a graphical user interface for a message hub user interface illustrating a pass phrase related message;
FIG. 29 is a screen shot of an example of a graphical user interface for a protected IM conversation user interface;
FIG. 30 is a screen shot of an example of a graphical user interface for a message hub user interface illustrating a pass phrase related notification at the sender;
FIG. 31 is a screen shot of an example of a graphical user interface for a message hub user interface illustrating a pass phrase related notification at the recipient;
FIG. 32 is a flow chart illustrating computer executable operations that may be performed in initiating a protected chat with a contact;
FIG. 33 is a flow chart illustrating computer executable operations that may be performed in receiving and utilizing a pass phrase from a contact;
FIG. 34 is a schematic diagram illustrating an example of a peer-to-peer messaging environment;
FIG. 35 is a schematic diagram illustrating multi-cast messaging;
FIG. 36 is a block diagram illustrating an example of a peer-to-peer message configuration; and
FIG. 37 is a block diagram of an example of a configuration for a mobile electronic communication device.

### DETAILED DESCRIPTION

For simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. In other instances, well-known methods, procedures and components have not been described in detail so as not to obscure the examples described herein. Also, the description is not to be considered as limiting the scope of the examples described herein.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

While examples provided below may relate to mobile devices, it can be appreciated that the principles discussed herein are equally applicable to any electronic device capable of participating in messaging.

In one aspect, there is provided a method of operating an electronic device, the method comprising: enabling a shared secret to be sent to a contact to initiate a key exchange to protect messages exchanged in an instant messaging conversation, the shared secret being sent using a communication medium other than instant messaging; and after the shared secret has been sent, displaying a pending protected instant messaging conversation user interface prior to receiving a confirmation associated with receipt of the shared secret by the contact, the pending protected instant messaging conversation user interface comprising an option to resend the shared secret.

In another aspect, there is provided an electronic device comprising a processor, memory, and a display, the memory comprising computer executable instructions for: enabling a shared secret to be sent to a contact to initiate a key exchange to protect messages exchanged in an instant messaging conversation, the shared secret being sent using a communication medium other than instant messaging; and after the shared secret has been sent, displaying a pending protected instant messaging conversation user interface prior to receiving a confirmation associated with receipt of the shared secret by the contact, the pending protected instant messaging conversation user interface comprising an option to resend the shared secret.

In yet another aspect, there is provided a non-transitory computer readable storage medium comprising computer executable instructions for operating an electronic device, the computer executable instructions comprising instructions for: enabling a shared secret to be sent to a contact to initiate a key exchange to protect messages exchanged in an instant messaging conversation, the shared secret being sent using a communication medium other than instant messaging; and after the shared secret has been sent, displaying a pending protected instant messaging conversation user interface prior to receiving a confirmation associated with receipt of the shared secret by the contact, the pending protected instant messaging conversation user interface comprising an option to resend the shared secret.

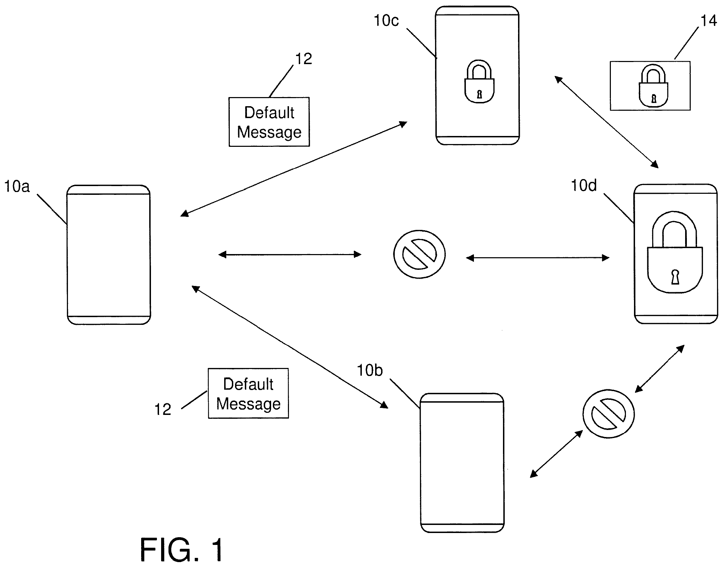

FIG. 1 illustrates a messaging environment in which various mobile devices 10 communicate with each other according to multiple different security policies, modes, states, or levels (hereinafter referred to commonly as "policies"). First and second mobile devices 10a, 10b are operating in this example according to a default, base, or lowest level policy (hereafter referred to as a "default" policy) having a lowest or baseline level of security among a plurality of policy levels. For example, the default policy can have encryption based on an encryption/decryption key stored on the mobile device 10 at the time of manufacture, which is common to all mobile devices 10 of a particular type. It can be appreciated that the default policy can include a lowest level of security or no security at all.

As shown in FIG. 1, the first and second mobile devices 10a, 10b can communicate default IM messages 12 between each other, but have limited if any capability of communicating with mobile devices 10 having a higher level policy. In the example shown in FIG. 1, two additional policy levels are shown, each applying additional cryptographic protection as will be explained in greater detail below, but having different policy rules for the manner in which IM messages can be communicated. For example, a third mobile device 10c is operating according to an intermediate policy which allows the third mobile device 10c to communicate with other mobile devices 10 that are operating according to a policy level that is higher than the default policy using protected IM messages 14, e.g., a further mobile device 10d. The third mobile device 10c can communicate with the first mobile device 10a (or second mobile device 10b) using default messages 12, namely messages that utilize the default cryptographic protocols, in which case the additional or strengthened security is not utilized. The fourth mobile device 10d in this example is subjected to a highest policy level and can only communicate with other mobile devices 10 that are capable of exchanging protected IM messages 14, for example only the third mobile device 10c in FIG. 1. It can be appreciated that a policy can include multiple different levels with that policy. For example, one policy level can be used for assigning a level of encryption, and another policy level can be used for indicating whether or not the user can message a contact having a lower level of encryption.

The intermediate policy can be applied by organizations or individuals that wish to be able to exchange protected IM messages 14 in appropriate circumstances, e.g., when communicating sensitive content with work colleagues. The highest restriction level can be applied by organizations who wish to completely limit communications for that particular device under all circumstances, e.g., for government employees or those in a highly regulated industry.

It can be appreciated that the number of policy levels shown in FIG. 1 is for illustrative purposes only. For example, two policy levels may be used in which a default policy level and one additional higher security level are available. Similarly, more than three policy levels may be used, e.g., to provide a gradient of cryptographic security according to the applied policy level.

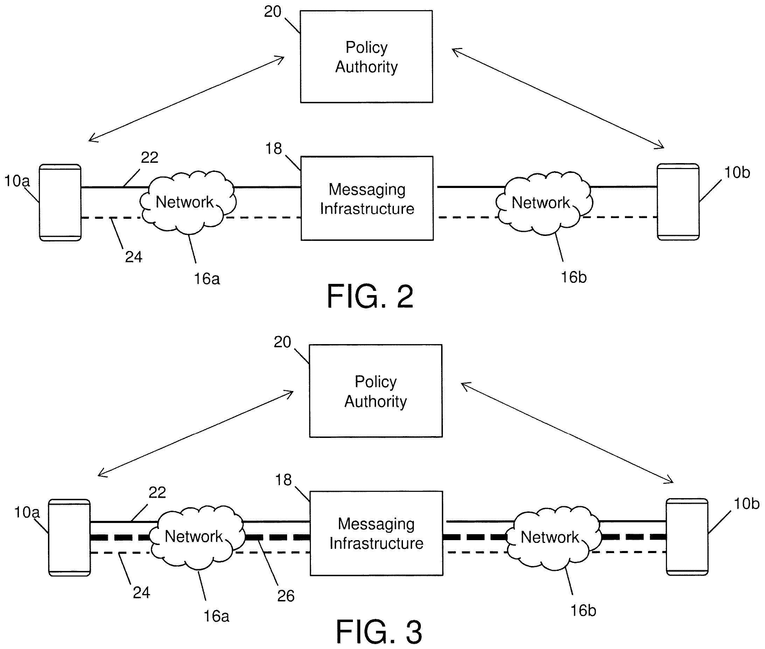

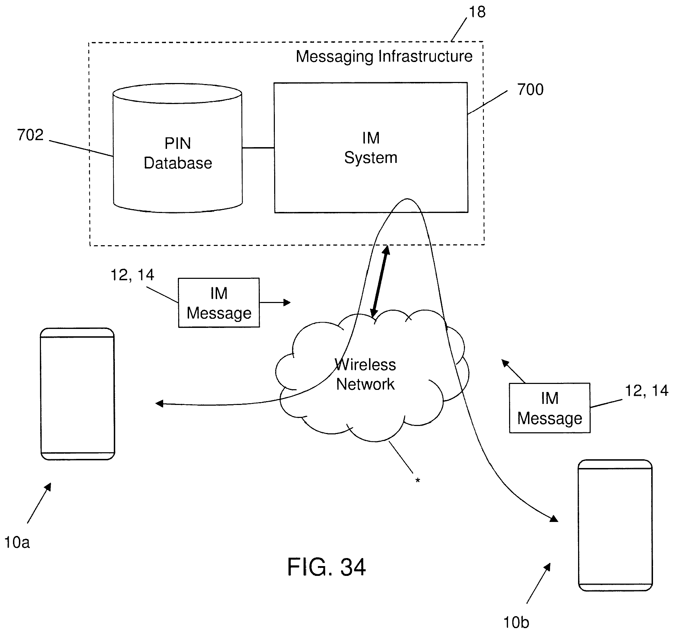

An example of a default level of cryptography used to generate default IM messages 12 is illustrated in FIG. 2. In the messaging scenario depicted in FIG. 2, a first mobile device 10a exchanges messages with a second mobile device 10b via a messaging infrastructure 18 (e.g., PIN-based messaging as illustrated in FIGS. 34-36 below). The first mobile device 10a communicates over at least one first network 16a (e.g., WiFi, cellular, Internet, etc.) in order to have the messaging infrastructure 18 facilitate delivery of messages to the second mobile device 10b over at least one second network 16b. A policy authority 20 is in communication with the first and second mobile devices 10a, 10b to facilitate the provision of keys and/or keying material, digital certificates, etc. Two security mechanisms are used in the default scenario shown in FIG. 2, namely encryption 24 and transport security 22. For example, the transport security 22 can be applied using transport layer security (TLS) or similar protocols such as secure sockets layer (SSL), a TLS predecessor. The messaging infrastructure 18 may also use a user identifier (ID) to perform authentication, e.g., using a single sign-on identity service. The user identifier can also be tied to a device ID, e.g., a PIN). The encryption 24 can be applied using any suitable cryptographic protocol. For illustrative purposes, each mobile device 10 can store a symmetric messaging encryption key, which is used to encrypt and decrypt messages exchanged with other mobile device 10, e.g., a symmetric-key block cipher such as a Triple Data Encryption Standard (DES) key having a desired key size. The symmetric messaging encryption key can also be used to authenticate received default messages 12. As noted above, the symmetric messaging encryption key can be a global encryption key added to each mobile device 10 at the time of manufacture to ensure each device is capable of exchanging default messages 12 and thus utilize at least a default level of security.

When implementing multiple levels of security, the policy authority 20 can be used to issue, revoke, renew, and otherwise manage security policies for the mobile devices 10. The policy authority 20 can be a third party service such as an application server or storefront, or can be implemented at an enterprise level where IT policies are controlled within an enterprise.

The relatively more secure cryptography applied to protected IM messages 14 is illustrated in FIG. 3. As can be seen in FIG. 3, in addition to encrypting messages using the default encryption 24 and applying transport security 22, an additional cryptographic mechanism 26 is utilized to further protect confidentiality and data integrity. The additional cryptographic mechanism 26 can be selected according to any desired or imposed security regulations, guidelines, standards, etc. In the present example, elliptic curve cryptography (ECC) is utilized, for example an Elliptic Curve Password-Authentication Key Exchange (EC-SPEKE) to securely exchange a symmetric key by protecting the exchange using a password, a key derivation function (KDF) to securely derive message keys from shared secrets, messaging signing using the Elliptic Curve Digital Signature Algorithm (ECDSA), and a one-pass Elliptic Curve Diffie-Hellman (ECDH) protocol to derive new shared secrets between two correspondents using a private key of one correspondent and a public key of the other. It can be appreciated that such an additional cryptographic mechanism 26 is illustrative and various other cryptographic mechanisms 26 can be used to utilize protected IM messages 14.

One example for utilizing protected IM messages 14 will now be described by way of example, in which the mobile device 10 may utilize a default policy or a "protected" policy. Each mobile device 10 that is subjected to the protected policy utilizes two long-term public/private key pairs that are static for the device and associated user, namely an encryption key pair and a signing key pair. To communicate protected IM messages 14, the mobile device 10 creates a pair-wise key with each contact that is also using the protected policy. For one-to-one communications, the pair-wise key can be considered a session key. The session key is used to encrypt all messages within an IM conversation. The pair-wise key is derived from the initiator's private encryption key and the recipient's public encryption key, e.g., using one-pass ECDH. Each session key is combined with unencrypted (but signed) keying material in the protected IM message 14 to produce a message encryption key. The message encryption key is derived from the keying material and session key, using a KDF.

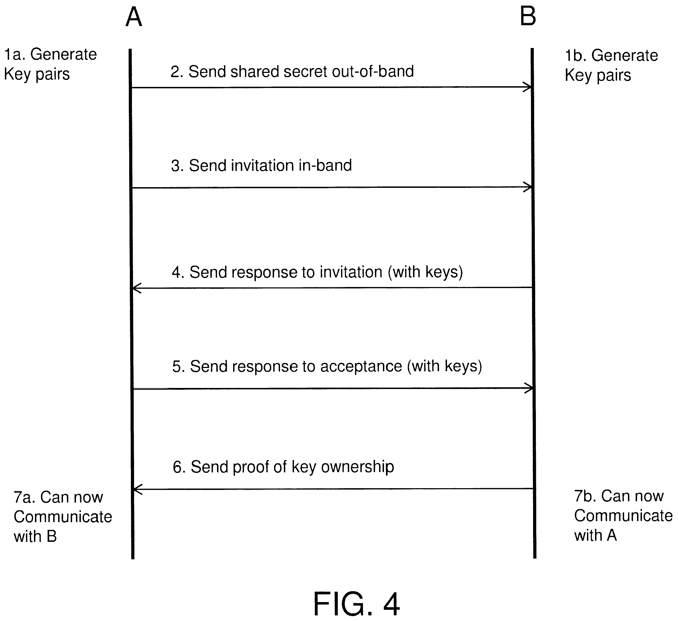

FIG. 4 illustrates an example of an ECDH key exchange process. The key exchange process is used to establish contact-specific keys for each IM contact with which a particular mobile device 10 wishes to communicate in accordance with the protected policy. In order to exchange keys, the parties exchange a shared secret (referred to hereinafter as a "pass phrase", which illustrates one example of such a shared secret) using an out-of-band communication channel, i.e., using a communication medium other than the messaging infrastructure 18 used to conduct IMing. For example, the out-of-band mechanism can include email, SMS, telephone, manual delivery (in person), short-range communications (e.g., NFC, WiFi, Bluetooth, infrared, etc.), etc. The shared secret can be generated in various ways, for example, using an auto-generated pass phrase. As discussed below, the pass phrase can be editable and/or can be user-supplied. It can also be appreciated that the pass phrase can be utilized in its original format, or can be converted to another format such as binary, hexadecimal, etc. The out-of-band exchange makes malicious third party attacks more difficult since such a third party should not know when or how the secret will be shared. The attacker would need to intercept both connectivity over the messaging infrastructure 18 and the out-of-band channel used for the shared secret exchange in order to compromise the key exchange. The use of an out-of-band channel can also enable the messaging infrastructure 18 to be removed from the key management process, thus allowing further flexibility for enterprise and individual entities.

The key exchange process shown in FIG. 4 begins with correspondent A generating the encryption and signing key pairs at 1a and correspondent B generating encryption and signing key pars at 1b. In this example, correspondent A is the initiator and sends a shared secret (e.g., pass phrase) at step 2 using an out-of-band communication channel. After sending the shared secret, correspondent A sends a first IM message 12 at step 3 using the messaging infrastructure 18, which can be considered an invitation to begin a "protected" chat or conversation. The invitation can include contact information and an indication of the highest protocol version the associated mobile device 10 supports. Correspondent B in this example responds to the invitation at step 4 with an acceptance, including an indication of the highest protocol version they support, proof that correspondent B knows the secret password (i.e., an indication that the user or device has entered or accepted entry of the supplied shared secret), and correspondent B's long-term public encryption and public signing keys. Correspondent A then responds to the acceptance at step 5 with proof that correspondent A knows the secret password (i.e. to prove that another party did not supply the shared secret), correspondent B's long-term public encryption and public signing keys, and proof that correspondent A has the private keys corresponding to the public keys they claim to own, e.g., by performing a verifiable cryptographic operation using the private keys. Similarly, at step 6, correspondent B sends proof to correspondent A of ownership of the public keys they have provided. Once correspondent A verifies the proof sent in step 6, both parties know each other's public keys and that they belong to an entity that also knows the corresponding private keys, and an entity that knows the correct shared secret. At steps 7a and 7b, the correspondents A, B can begin exchanging protected IM messages 14.

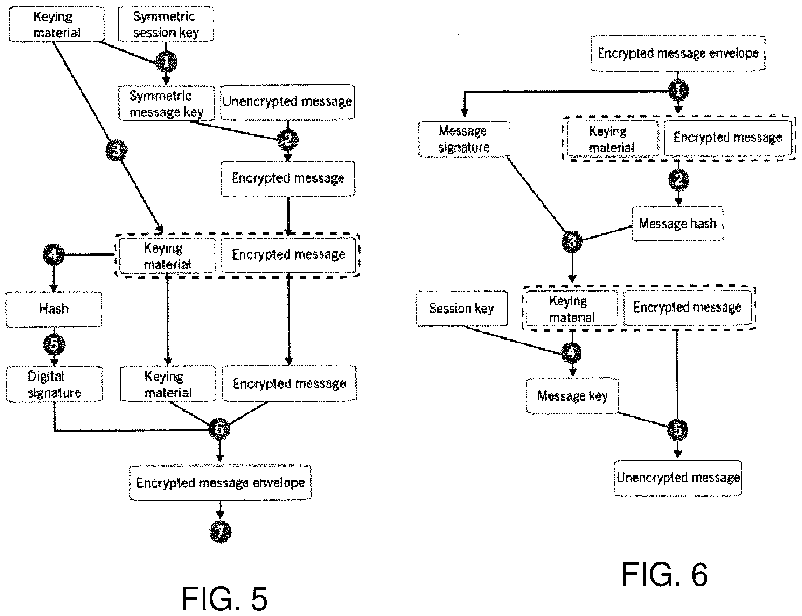

Once the key exchange process has been completed, e.g., as shown in FIG. 4, the mobile devices 10 use the long-term signing and encryption key pairs to digitally sign and encrypt respectively a protected IM message 14, and to perform the complementary cryptographic processing for received messages. FIG. 5 illustrates an example of cryptographic processing applied to outgoing protected IM messages. In this example, both a message key and a session key are used, wherein the session key is a symmetric key shared by all conversation participants, and is established with a one-pass ECDH using the contact's public encryption key. At step 1, a message key is established with the KDF for each new message, using the session key and unique per-contact keying material. The unencrypted message is then encrypted using the symmetric message key at step 2 to generate an encrypted message, which is combined with the keying material at step 3 to recreate the message key in the unencrypted portion of the message being generated. The combined keying material and encrypted message is then hashed at step 4 (e.g., using SHA2-512), and the hash is signed at step 5 using the sender's private signing key, e.g. using ECDSA. The digital signature, keying material, and encrypted message are then wrapped into a message envelope at step 6 to generate a protected IM message 14, and the protected IM message 14 is passed to the transport layer at step 7 (e.g., to send the message using TLS).

FIG. 6 illustrates an example of cryptographic processing applied to incoming protected IM messages 14. The encrypted message envelope containing or otherwise corresponding to the protected IM message 14 is received and is processed at step 1 to parse the envelope and separate the digital signature from the keying material and encrypted message. The digital signature is decrypted using the sender's public signing key to obtain the message hash at step 2. The message hash is compared to a locally computed hash to determine if they match. If so, the recipient confirms that the sender sent the message (since only the sender has the private signing key corresponding to the public signing key), and that the message has not been altered (since the hashes match). The message hash and the digital signature are used at step 3 to verify the message signature using the sender's public key to determine whether or not the message is authentic. The message key is then derived at step 4 from the session key and the unencrypted keying material. The message is used at step 5 to decrypt the message, e.g., using AES in CTR mode in the examples discussed above.

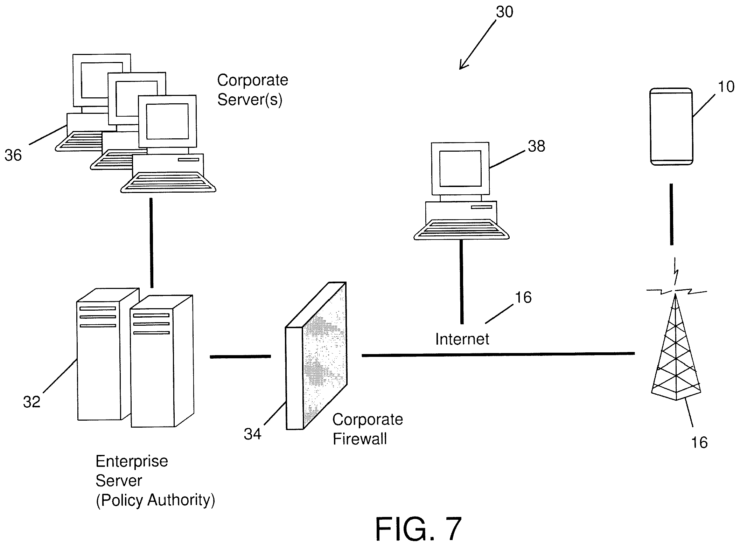

As discussed above, the protected policy can be utilized in an enterprise environment 30, an example of which is shown in FIG. 7. The enterprise environment 30 includes an enterprise server 32 and one or more corporate servers (e.g., mail server) 36 behind a corporate firewall 34 which enables individuals within the enterprise to communicate using the Internet and wireless networks 16, using mobile devices 10 and other computing devices 38. The enterprise server 32 can be used to deploy the protected policy, e.g., by pushing the policy out to enterprise devices. In this way, the enterprise server 32 can be used to enforce a higher level of security to be used by devices within the enterprise.

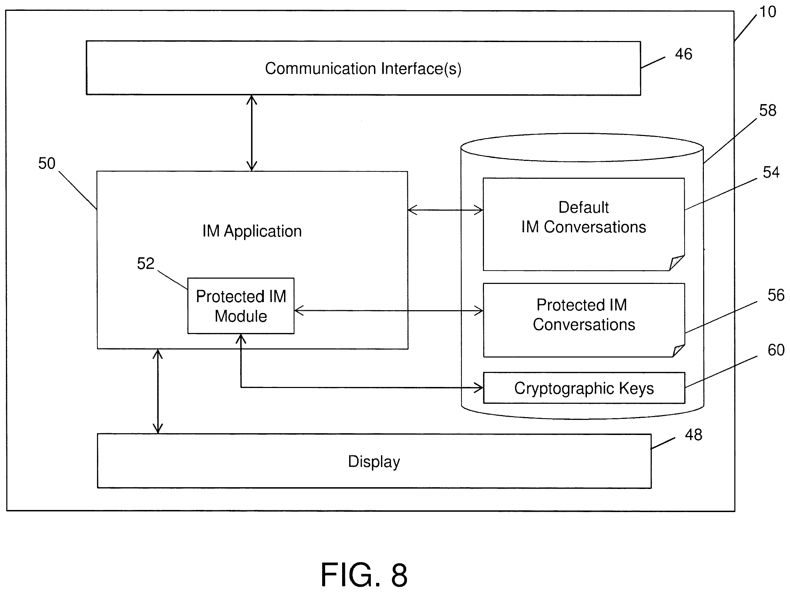

Turning now to FIG. 8, an example of a configuration for a mobile device 10 is shown. The mobile device 10 includes one or more communication interfaces 46 to enable the mobile device 10 to communicate with other devices, services, and domains, e.g. to communicate via one or more networks 16 as shown in FIGS. 2 and 3. The one or more communication interfaces 46 in this example generally represents any one or more short-range, wide-area, wired, or wireless communication connections utilizing a connection/connector/port, wireless radio, etc. The mobile device 10 also includes a display component 48, which may be used by various applications and services on the mobile device 10 including an IM application 50 in the example shown in FIG. 8. The IM application 50 is also configured to utilize the one or more communication interfaces 46 to enable "IMing" on the mobile device 10.

The IM application 50 includes or otherwise has access to a protected IM module 52 for enabling participating in protected IM conversations 56 with other protected devices, as well as to participate in default IM conversations 54 with devices not subject to a protected policy. An IM storage 58 may therefore be included or otherwise accessible to the IM application 50 for storing protected IM conversations 56, default IM conversations 54, and the various cryptographic keys (and/or keying material) as discussed above. The cryptographic keys 60 would include a pair-wise key for each contact associated with the IM application 50 which can also communicate according to a protected policy. It can be appreciated that the delineation between components shown in FIG. 8 is for illustrative purposes and various other configurations are possible. It can also be appreciated that the allocations of memory storage are shown for illustrative purposes and various separate memory allocations and/or devices may be used, e.g., to securely store cryptographic keys in a hardware security module or other higher security component.

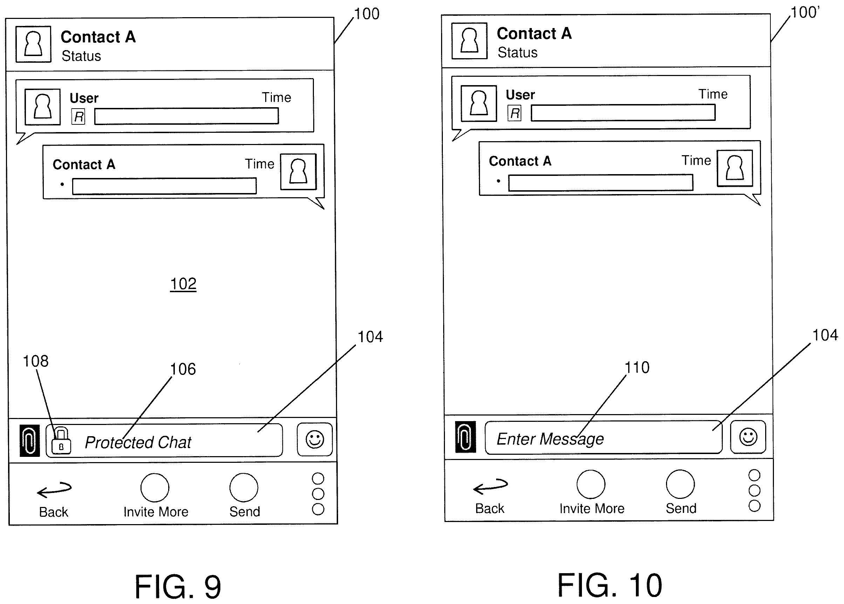

An example of a protected IM conversation user interface (UI) 100 is shown in FIG. 9. The protected IM conversation UI 100 includes a badge 108 or icon or other identifying feature in an input field 104 as well as the text "Protected Chat" 106 in order to identify the protected IM conversation UI 100 as being related to a protected conversation with a contact who is also subjected to a protected policy. It can be appreciated that other visual identifiers can be used such as different text colors, different fonts, border coloring, background coloring, etc. Moreover, the badge 108 could be placed in other locations within the UI 100, such as in a header portion near the avatar and contact name. FIG. 10 illustrates a default IM conversation UI 100', which does not include the badge 108 or text 106, but instead uses the text "Enter Message" 110 to differentiate between default and protected conversations. The protected IM conversation UI 100 is used subsequent to performing a key exchange with the corresponding contact, e.g., as shown in FIG. 4.

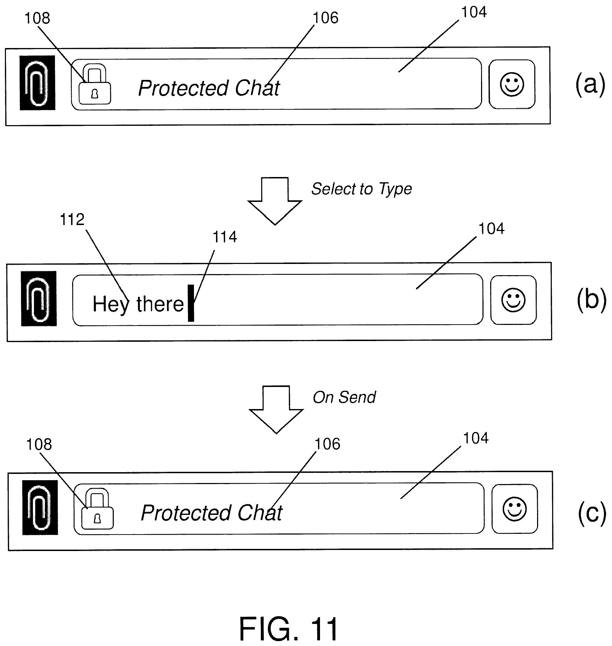

FIG. 11 illustrates an enlarged view of the input field 104 during message composition. In view (a), the badge 108 and "Protected Chat" text 106 are shown. When the input field 104 is selected for typing, the badge 108 and text 106 are removed as shown in view (b) to enable the message to be composed. After sending the composed message, the badge 108 and text 106 may be reinstated as shown in view (c). It can be appreciated that while the badge 108 is removed, the text being typed into the input field 104 can be changed (with respect to default text) to incorporate a consistent color to further extend the "protected" connotation when the badge 108 is removed. It can also be appreciated that in other examples the badge 108 can be caused to remain in the input field 104 at all times.

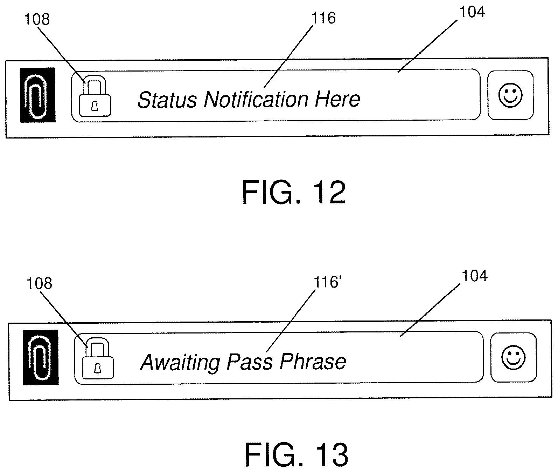

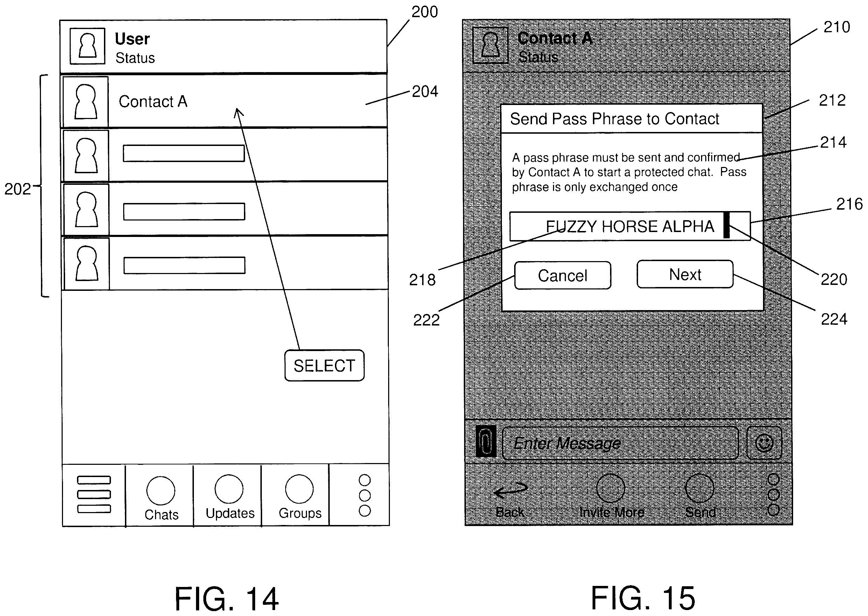

As shown in FIG. 12, the input field 104 can also be used to provide status notification text 116. FIG. 13 illustrates a specific example wherein the status notification 116' includes the text "Awaiting Pass Phrase" while the pass phrase (shared secret) is awaiting confirmation from the contact, details of which will now be described making reference to FIGS. 14 through 31.

FIG. 14 illustrates a chats list UI 200 which includes a number of chat list entries 202 each corresponding to an IM conversation with an IM contact. In the example shown in FIG. 14, both protected and default IM conversations are listed together and without distinguishing between the two types of chats. However, it can be appreciated that separate chat lists could also be used, or a distinguishing feature applied to either the default or protected chats (e.g., color, font, badge, etc.). It can be appreciated that other IM Uls can also be modified to include distinguishing features applied to either the default or protected chats, e.g., contact lists (listing contacts), notifications/updates lists, etc. Moreover, the various IM Uls shown and/or discussed herein can be updated to include status information regarding key exchanges, pass phrase exchanges, invitation exchanges, and other processes involving communications between the mobile device 10 and one or more contacts. By selecting the list entry 204 associated with Contact A as shown in FIG. 14, a pending protected IM conversation UI 210 is displayed as shown in FIG. 15, in which a pass phrase entry dialog 212 is provided. The pass phrase entry dialog 212 includes an explanatory message 214 to instruct the user as to the purpose of the pass phrase and procedure for beginning a protected chat. The pass phrase entry dialog 212 also includes an pass phrase entry field 216, for entering a pass phrase 218. The pass phrase 218 can be automatically generated and populated by the IM application 50, or can be created and/or edited by the user, e.g., by selecting the pass phrase entry field 216 to begin typing as illustrated with the provision of a cursor 220 in FIG. 15. By selecting a cancel button 222 the protected chat initiation (and thus key exchange with Contact A) can be aborted. By selecting a next button 224, the pass phrase is sent to Contact A to initiate the key exchange process.

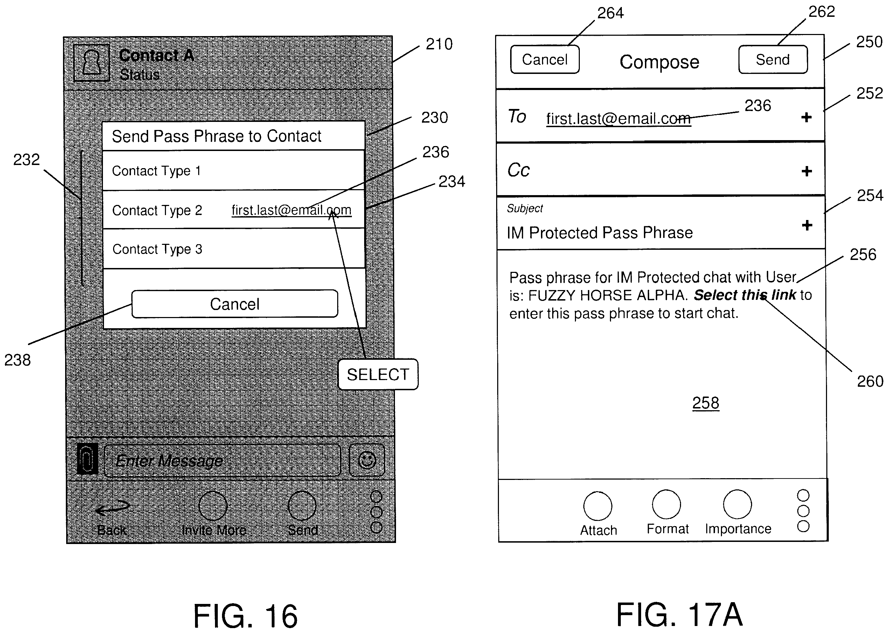

In some examples the user can be provided with an opportunity to select from a plurality of available out-of-band communication channels, for example, if permitted by the protected policy and if available on the mobile device 10. FIG. 16 illustrates a contact type selection dialog 230 that is displayed after selecting the next button 224. The contact type selection dialog 230 includes a list 232 of available contact types, which can identify the communication medium and/or an associated address (e.g., phone number, email address, etc.). In this example, an entry 234 for Contact Type 2 is selected, which includes an email address 236, namely "first.last@email.com". A cancel button 238 is also provided to enable the send pass phrase process to be aborted. By selecting the entry 234 as shown in FIG. 16, an email message composition UI 250 is displayed as shown in FIG. 17A. It can be appreciated that for other contact types, other corresponding message composition Uls would be displayed. It can also be appreciated that a default message may be sent automatically to thereby skip the message composition step.

The email composition UI 250 includes a "To" entry field 252 that is, in this example, pre-populated with the selected email address 236. If Contact A has more than one email address in an associated contact details, other mechanisms can be utilized to allow the user to select from one of a plurality of available addresses. Similarly, if an email address is not stored, or the user wishes to use a different email address, the "To" entry field 252 can be used to manually enter an address. A subject line 254 is also pre-populated in this example to identify the email message as being related to the IM protected pass phrase process. The content 258 of the email message is also pre-populated with an invitation message 256. The invitation message 256 indicates what the pass phrase 218 is, and may optionally include a link 260 to direct the recipient to a pass phrase entry UI (described below).

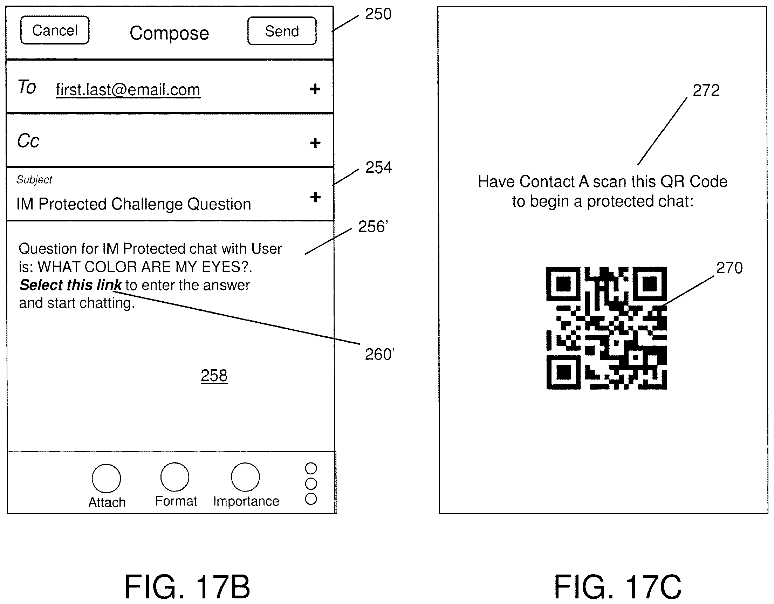

While the example shown in FIGS. 15, 16, and 17A illustrate the provision of a shared secret using an out-of-band passphrase delivery, it can be appreciated that other mechanisms for mutual authentication can be used, such as a challenge/response mechanism, captcha mechanism, biometric (e.g., fingerprint), image selection, etc. FIG. 17B illustrates one such example wherein the message composition UI 250 includes a challenge question 256' to be sent to the selected address, in this example "What Color are my Eyes?". A link 260' can also be provided in this scenario, which when selected displays a UI for entering a response to the challenge. The challenge question can be generated automatically or can be user-supplied. FIG. 17C illustrates yet another example in which the shared secret is provided using a QR code 270 which can be displayed by User to Contact A to initiate the key exchange and begin a protected chat. As shown in FIG. 17C, the QR code 270 can be displayed with an instructional message 272 indicating how to use the QR code 270 to provide the shared secret. It can be appreciated that options can be provided to utilize a plurality of mechanisms for sharing the shared secret. For example, User may be provide with an option to use a pass phrase 218 via a communication, or a QR code scan or other short-range mechanism such as an NFC tap.

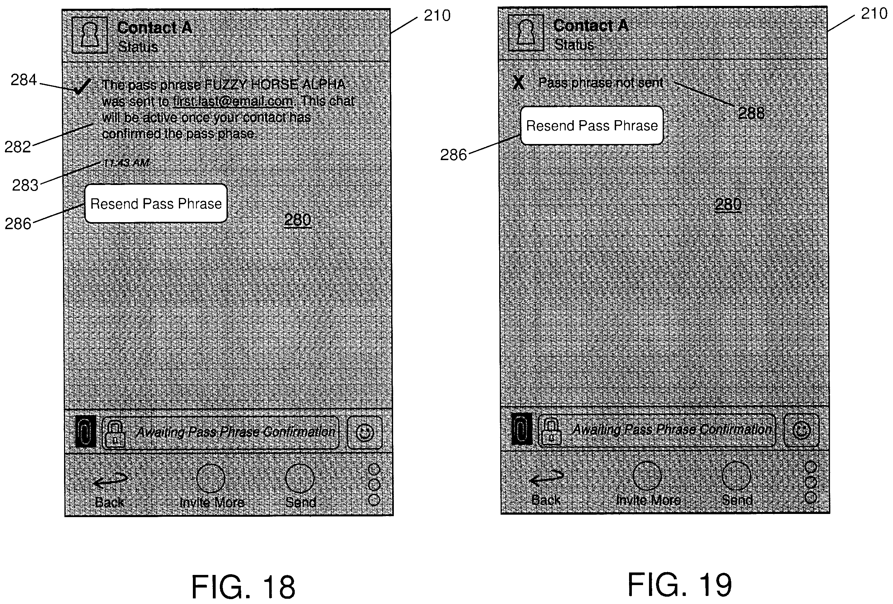

After sending the pass phrase 218 (or other form of shared secret), the pending protected IM conversation UI 210 is updated to provide the user with useful information regarding the status of the pass phrase provision and underlying key exchange process. In FIG. 18, a message content portion 280 of the pending protected IM conversation UI 210 is updated to include a first notification message 282 indicating that the pass phrase 218 has been sent, and which contact address was used. This allows the user to determine after the fact how the pass phrase was sent in case they wish to retry with a new address or to remind the contact of the pending confirmation. To further assist the user, a check mark 284 or other visual indicator can be used to signify that the pass phrase was sent. Since the pass phrase was sent using an out-of-band channel, an indication of whether the message was delivered and/or received would require communication between the IM application 50 and the corresponding out-of-band application. A first timestamp 283 is also displayed with the first notification message 282 to enable the user to determine how long it has been since the pass phrase was sent to Contact A.

As also shown in FIG. 18, a resend button 286 is embedded or otherwise included in the pending protected IM conversation UI 210 to allow the user to initiate a resending procedure. For example, the user may select the resend button 286 to send a new pass phrase to a different email account or using a different communication medium. It can be appreciated that to maintain security, the pass phrase should only be used once and selection of the resend button 286 should trigger generation of a new pass phrase or otherwise enable selection or composition of a new pass phrase, e.g., by returning to the UI shown in FIG. 15. It can be appreciated that the notifications and resend button 286 can also be included for other exchange mechanisms such as a challenge/response.

The message content portion 280 can also be used to display other types of notifications, such as an unsuccessful delivery message 288 as shown in FIG. 19. For example, if the pass phrase is sent when a server or system is unavailable or the mobile device 10 is out-of-coverage for at least the corresponding out-of-band channel, the user may be notified conveniently within the pending protected IM conversation UI 210. Similar to what is shown in FIG. 18, the resend button 286 can be displayed while the protected conversation establishment is pending to allow the user to resend a new pass phrase, e.g., using a different address or medium. For example, the pass phrase may be unsuccessfully delivered if an incorrect email address is used which "bounces back" to the mobile device 10. In such a scenario, the user would be able to resend the pass phrase and correct the error. Although not shown in FIG. 19, the address used in the unsuccessful attempt can also be displayed to enable the user to ascertain whether or not there was an error in the address used.

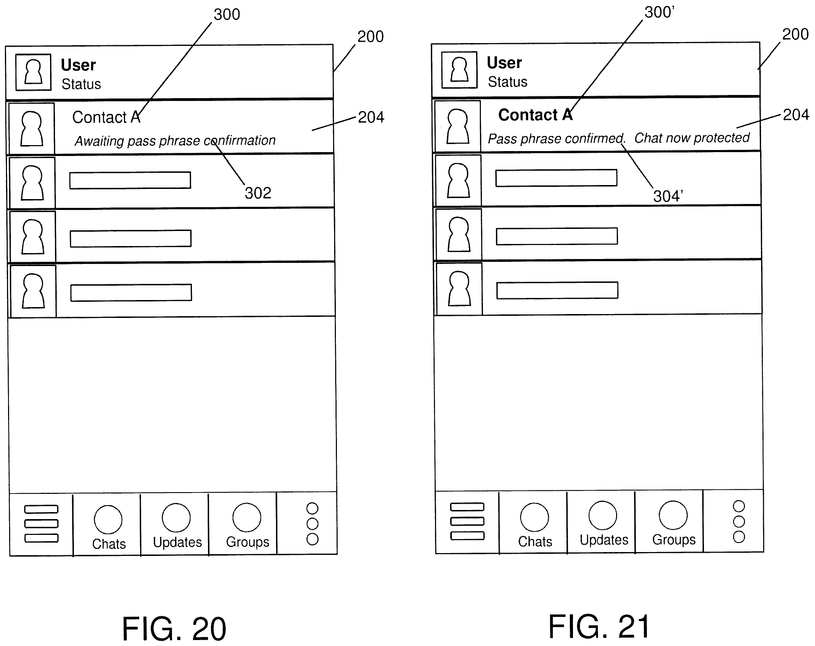

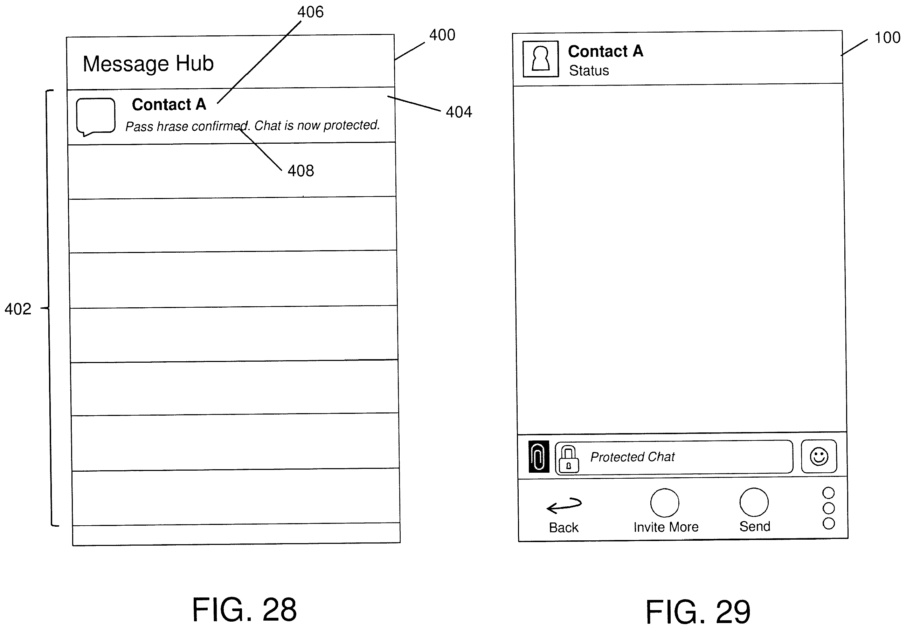

After sending the pass phrase, notifications can be populated in other Uls. For example, as shown in FIG. 20, the list entry 204 for Contact A in the chats list UI 200, in addition to displaying the contact name 300 can provide a status notification 302 associated with the pass phrase, in this example: "Awaiting pass phrase confirmation". In this way, the user can ascertain whether or not they may begin a protected chat without having to necessarily select and display the pending protected IM conversation UI 210. FIG. 21 illustrates the same list entry 204 upon receiving confirmation of the pass phrase from Contact A. In this example, the contact name 300' is highlighted similar to when a new message is received to draw attention to the associated updated notification 304' which indicates: "Pass phrase confirmed. Chat now protected". The user may then access the pending protected IM conversation UI 210 by selecting the list entry 204 to display a new protected IM conversation UI 100 as shown in, for example, FIG. 29.

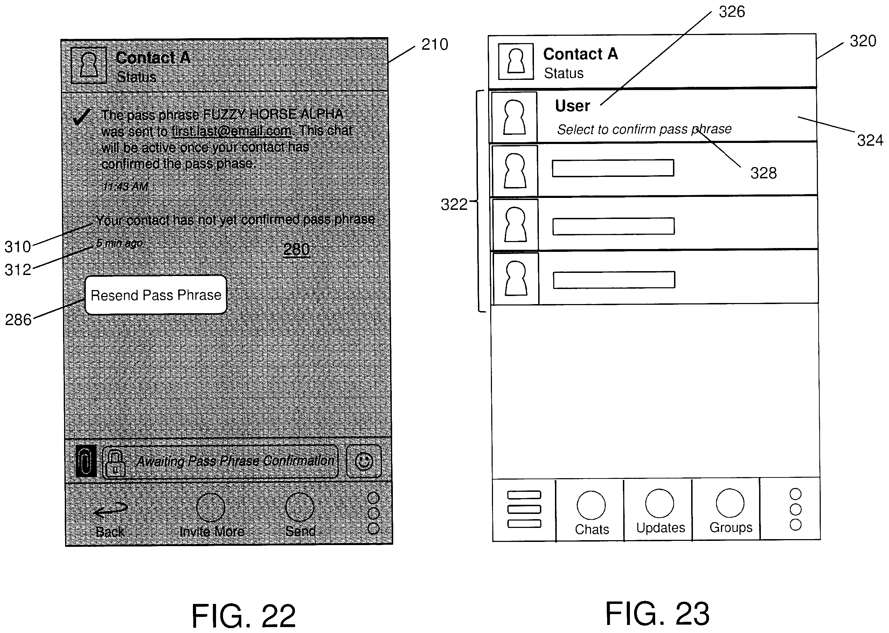

Turning now to FIG. 22, the pending protected IM conversation UI 210 can also be periodically updated to provide additional status notifications, e.g., a second status notification 310 and second time stamp 312 in the message content portion 280. The second status notification 310 in this example indicates that the contact has not yet confirmed the pass phrase. The second time stamp 312 allows the user to determine how long the pending confirmation has taken so far, in order to determine whether or not to use the resend button 286 which is again displayed in the message content portion 280. As noted above, the pending protected IM conversation UI 210 can also be updated to include additional information to inform the user of the progress of the pass phrase or other data and information exchanges with the contact.

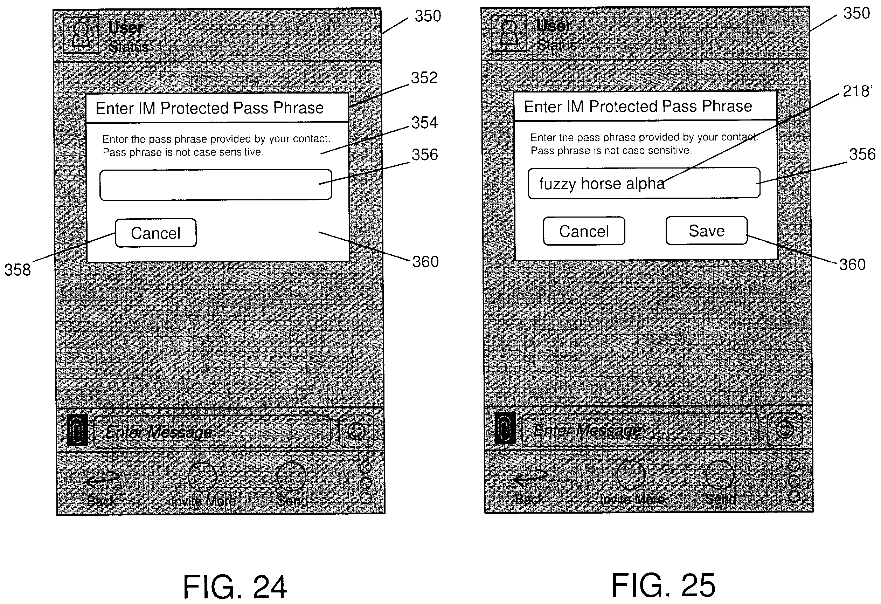

FIG. 23 illustrates an IM chats list UI 320 for Contact A, which includes a list entry 324 associated with "User", namely the initiator of the pass phrase process. Similar to what is shown in FIG. 21, a contact name 326 associated with the sender of the pass phrase 218 can be highlighted in a manner similar to a conversation with a newly received message. A notification 328 can also be provided, in this example indicating: "Select to confirm pass phrase". By selecting the list entry 324, a pending protected IM conversation UI 350 for the recipient is displayed as shown in FIG. 24. The pending protected IM conversation UI 350 also displays a recipient pass phrase entry dialog 352 that includes an instruction message 354 indicating that the pass phrase was sent using another communication channel and in this example that the pass phrase is not case sensitive. An input field 356 is provided to enable the recipient user to enter the pass phrase. A cancel button 358 is provided to allow the recipient user to abort the pass phrase provision process. A save button 360 is also provided, which can be kept inactive as shown in FIG. 24 until a pass phrase is entered, as shown in FIG. 25. In FIG. 25 a recipient-entered pass phrase 218' is provided in the input field 356 and the save button 360 becomes active to allow the recipient to submit the pass phrase 218'.

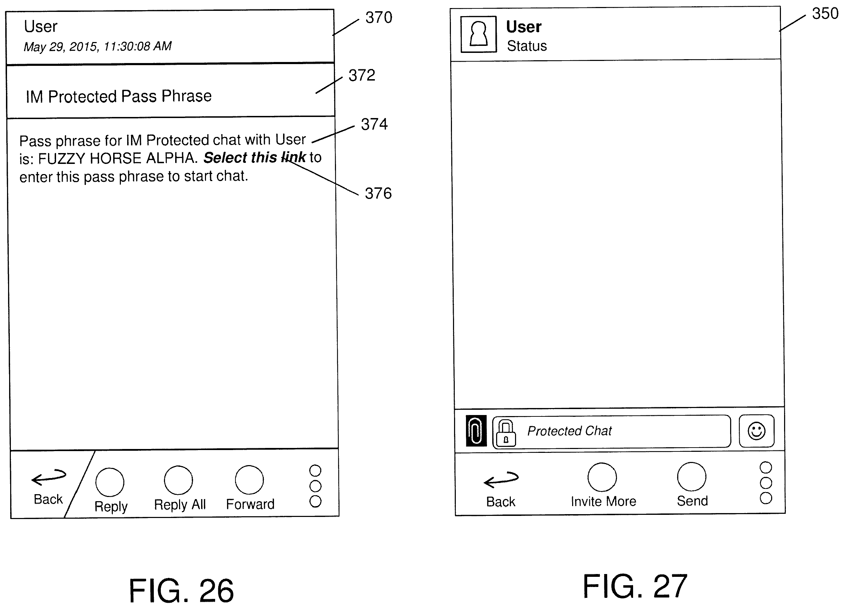

The pass phrase 218' can also be automatically populated and the pending protected IM conversation UI 350 accessed from the received invitation message. FIG. 26 illustrates an example of an email message UI 370 which includes a subject line 372 and message 374 corresponding to what was composed and sent by the initiator. As indicated above, a link 376 can be embedded into the invitation message 374. By selecting the link 376, the entry dialog 352 shown in FIG. 25 can be automatically displayed, and can include a pre-populated input field 356 with the supplied pass phrase 218' to minimize the steps used to confirm the pass phrase and thus minimize interruptions experienced by the recipient. As discussed above, the pass phrase can be provided using various out-of-band channels, including using personal interactions between the initiator and the recipient. For example, the pass phrase or other secret can be exchanged transparently to the user using a QR scan, NFC tap, etc.

After confirming the pass phrase 218', using which ever mechanism the recipient uses, a new protected chat UI 350 for the recipient, with "User" (i.e., the initiator) is displayed as shown in FIG. 27, which can thereafter be used to conduct a protected conversation between User and Contact A.

Various other notifications can be utilized to convey the status of the pass phrase process. For example, as shown in FIG. 28 a unified or amalgamated inbox or message repository, hereinafter a message "hub" UI 400 is shown, which includes various list entries 402, which may include, for example, incoming or outgoing messages from a plurality of different messaging or communication media, notifications, updates, alerts, missed phone calls, etc. In the example shown in FIG. 28, an IM list entry 404 corresponding to the pending protected IM conversation UI 210 with Contact A is shown, in which the contact name 406 is highlighted to indicate a new message, and a notification 408 is provided, indicating: "Pass phrase confirmed. Chat is now protected". Similar to the UI flow described above with respect to the IM chats list UI 200, by selecting the list entry 404, the now-enabled protected IM conversation UI 100 is displayed as shown in FIG. 29 to enable the user to begin the protected conversation.

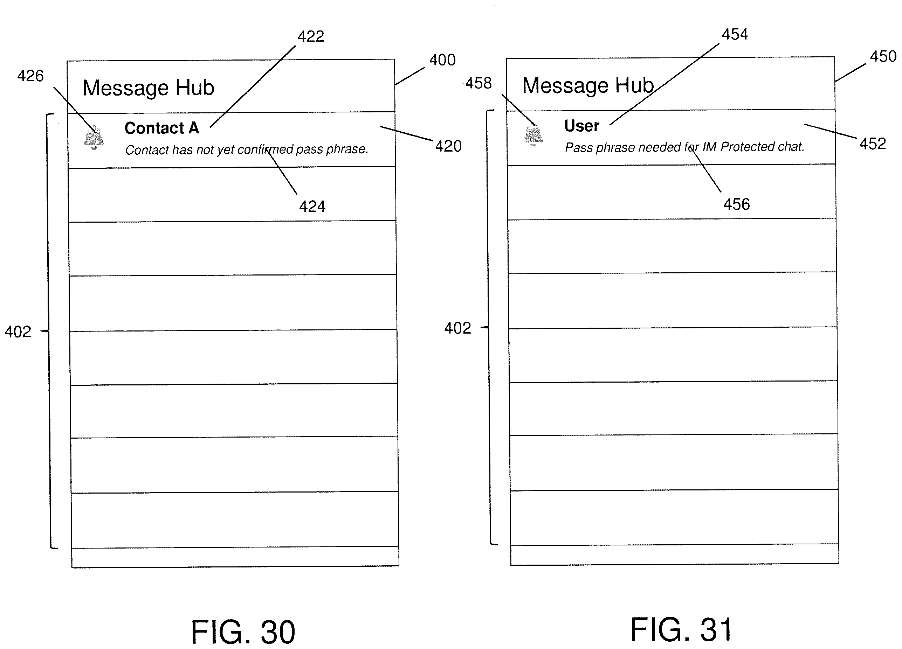

The message hub UI 400 can also be used to provide other types of notifications, as shown in FIG. 30 in which a list entry 420 includes a notification that is distinct from identifying pass phrase confirmation as shown in FIG. 28. In this example, the list entry 420 includes a notification badge 426, a contact name 422 (highlighted when unread/unattended), and a notification message 424, indicating: "Contact has not yet confirmed pass phrase". It can be appreciated that similar notifications can be provided at the recipient's end. For example, as shown in FIG. 31, a recipient message hub UI 450 may also include a notification list entry 452 that includes a notification badge 458, an indication of the sender by way of a contact name 454 in this example, and a notification message 456, in this example: "Pass phrase needed for IM protected chat".

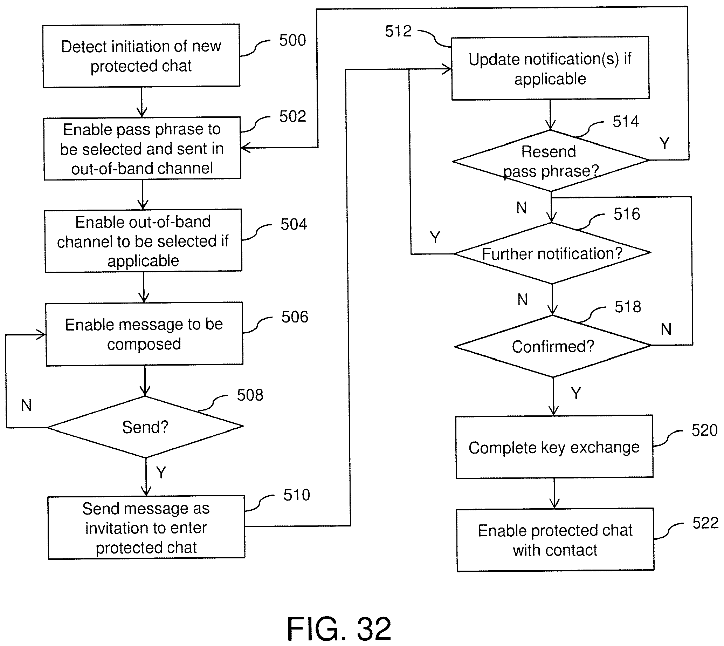

FIG. 32 illustrates computer executable operations performed by an initiator in initiating a protected chat using the pass phrase 218. At 500 the IM application 50 detects the initiation of a new protected chat, e.g., by detecting selection of a contact that is known to also by under the protected policy. The IM protected module 52 may then be utilized to perform the pass phrase process by enabling the pass phrase to be selected (i.e. pre-populated text confirmed or text to be entered) and sent in an out-of-band channel at 502. The IM protected module 52 can also enable the user to select from multiple available out-of-band channels at 504 and enable a message to be composed at 506. It can be appreciated that FIG. 32 assumes that the pass phrase exchange proceeds through the illustrated steps but that "cancel" options can be provided to abort the process at any of these stages as illustrated in the Uls. The IM protected module 52 then determines at 508 whether or not the composed invitation message has been selected to be sent. Once it has been selected to be sent (e.g., by selecting the send button 262), the message is sent at 510 as an invitation to enter a protected chat.

After sending the invitation, one or more Uls can be updated at 512, e.g., as discussed above to indicate that the pass phrase has been sent, including providing a notification in the pending protected IM conversation UI 210. While waiting for the pass phrase to be confirmed, the IM protected module 52 determines at 514 whether or not to resend the pass phrase, e.g., if detecting selecting of the resend button 286. If so, the process may repeat from 502. If not, the IM protected module 52 determines at 516 whether or not to provide an additional notification, e.g. by adding another notification message to the pending protected IM conversation UI 210 and repeating 512. The IM protected module 52 also determines at 518 whether or not the pass phrase has been confirmed by the recipient contact, e.g., by looking for received messages or other data indicating the pass phrase was successfully entered by the recipient. Once confirmed, the key exchange process is completed at 520, which should be performed transparently to the user, and the protected chat is enabled at 522.

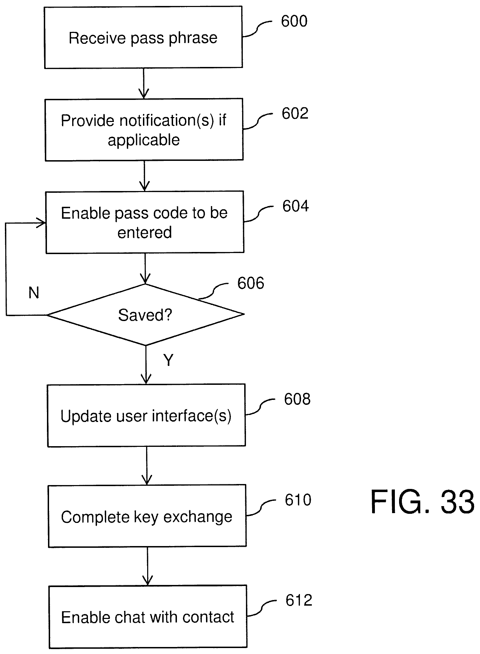

FIG. 33 illustrates computer executable operations performed by a recipient contact in participating in the pass phrase process to establish the key exchange. At 600 the recipient mobile device 10 receives the pass phrase 218 in an out-of-band communication, e.g., via email. The IM application 50 and/or IM protected module 52 may also provide one or more notifications to the recipient at 602, e.g., in a message hub, chats list, etc. The IM protected module 52 at the recipient then enables the pass code to be entered at 604 and determines at 606 whether or not the correct pass phrase has been saved. If not, re-entry (e.g., up to a predetermined number of times) can be performed by repeating 604. Once successfully saved, the Uls for the IM application 50 are updated at 608, e.g., to enable the protected chat UI to be accessed via a notification, and the key exchange is completed at 610, which should be transparent to the user. The protected chat with the initiator contact is then enabled at 612.

Accordingly, it can be seen that the pass phrase exchange and confirmation process can be made convenient to the user by incorporating various notifications both within and outside of the pending protected IM conversation UI 210, and be enabling the user to conveniently resend a pass phrase 218 if desired.

For illustrative purposes, an example of a communication system including a messaging infrastructure 18 that enables mobile devices 10a, 10b to communicate via an IM (or other P2P-type) messaging system 700 over a wireless network 16, is shown in FIG. 34. It will be appreciated that the mobile devices 10a, 10b shown in FIG. 34 are shown as such for illustrative purposes and many other mobile devices 10 (not shown) may also be capable of communicating with or within the communication system. It will also be appreciated that although the examples shown herein are directed to mobile communication devices, the same principles may apply to other devices capable of communicating with the IM system 700. For example, an application (not shown) hosted by a desktop computer or other "non-portable" or "non-mobile" device (e.g., computer 38 shown in FIG. 7) may also be capable of communicating with other devices (e.g. including mobile devices 10) using the IM system 22.

The IM system 22 is, in this example, a component of the messaging infrastructure 18 associated with the wireless network 16. The messaging infrastructure 18 in this example includes, in addition to the IM system 22, and among other things not shown for simplicity, a personal identification number (PIN) database 702. The PIN database 702 in this example embodiment is used to store one or more PINs associated with respective mobile devices 10, whether they are subscribers to a service provided by the messaging infrastructure 18 or otherwise.

A first mobile device 10a may communicate with a second mobile device 10b and vice versa via the IM system 700, in order to perform IM messaging or to otherwise exchange IM-based communications. For ease of explanation, in the following examples, any IM-based communication may also be referred to as a IM message 12, 14 as shown in FIG. 34. It can be appreciated that only two mobile devices 10a, 10b are shown in FIG. 34 for ease of illustration and, for example, in an electronic group conversation, three or more mobile devices 10 would be participating in the group conversation. The IM system 700 in the example shown is configured to facilitate communication of both regular or default IM messages 12 utilizing a first level of security, and protected IM messages 14, utilizing a second level of security that is higher than the first level of security as discussed above by way of example. For example, the IM system 700 can identify from information included in the messages 12, 14 whether the message is a regular IM message 12 or a protected message 14 for the purpose of determining how to store a copy of the message 12, 14.

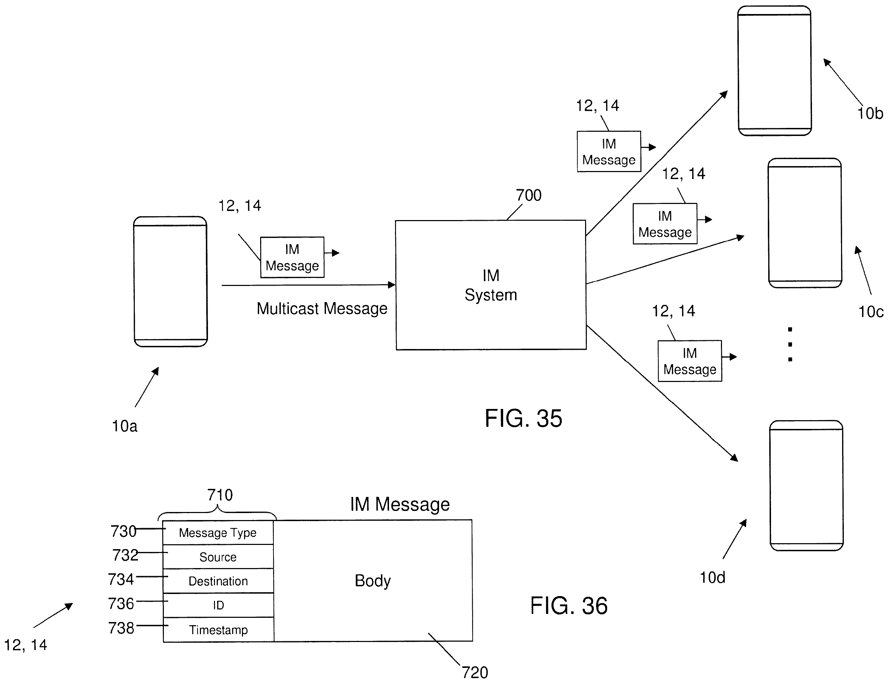

In some example embodiments, the IM system 700 may be capable of sending multi-cast messages, i.e. forwarding a single message from a sender to multiple recipients without requiring multiple IM messages 12, 14 to be generated by such a sender. For example, as shown in FIG. 35, the IM system 700 can be operable to enable a single IM message 12, 14 to be sent to multiple recipients by addressing the IM message 12, 14 to multiple corresponding IM addresses, and having the IM system 700 multicast the message 12, 14 to those recipients.

An example of a IM message 12, 14 is shown in greater detail in FIG. 36, and has a format that is particularly suitable for a PIN-to-PIN based system. In a typical IM protocol, each IM message 12, 14 has associated therewith a source corresponding to the mobile device 10 which has sent the IM message 12, 14 and includes a destination identifying the one or more intended recipients. Each IM message 12, 14 in this example includes a body 720, which contains the content for the IM message 12, 14 (e.g. text, audio, images, video, or other data), and a header 710, which contains various fields used for transmitting and processing each IM message 12, 14. In this example, the header 30 includes a message type field 730 to specify the type of transmission (e.g. chat, registration, block, presence, etc.), a source field 732 to specify the device address for the sender, a destination field 734 to specify the device address(es) for the one or more intended recipients, an ID field 736 to identify the corresponding IM application (e.g., see IM application 50 in FIG. 8) and a timestamp field 738 to indicate the time (and if desired, the date) at which the IM message 12, 14 was sent by the designated sender. The message type field 730 may be used to.designate whether the message 12, 14 is a regular IM message 12 or a protected IM message 14. However, the ID field 740 could also be used with a particular ID type being recognizable as a protected-type message 14. Another field could also be added to the header 710 to indicate protected IM messages 14.

It can be appreciated that in this example, the ID field 736 can be used to specify the application ID to identify a IM application on the mobile device 10. Where the IM application relates to, for example, an IM system, the message type field 730 can also be used to designate an IM communication, and the ID field 736 would then correspond to a conversation ID, i.e. a conversation thread the message 12, 14 corresponds to (e.g. such that each message 12, 14 is identified by the conversation in which it was sent).

Other information or attributes may be included in the IM message 12, 14, such as a subject field (not shown) to enable a subject for part or all of a conversation (in an IM example) to be transported with the IM message 12, 14 (e.g. to create new subjects, modify subjects, notify others of subjects, etc.), or application details field (not shown) to provide application-specific information such as the version and capabilities of the application.

The IM system 700 can utilize any suitable IM protocol operated by, for example, a IM router (not shown), which may be part of the messaging infrastructure 18. It can be appreciated however that a stand-alone IM configuration (i.e. that does not rely on the messaging infrastructure 18 - not shown) may equally apply the principles herein. The IM system 700 may also enable mobile devices 10 to communicate with desktop computers thus facilitating, for example, communications such as instant messaging (IM) between mobile applications and desktop applications on the desktop computer.

The IM system 700 can be implemented using a router-based communication infrastructure, such as one that provides email, SMS, voice, Internet and other communications. Particularly suitable for hosting a IM messaging router, is a wireless router or server used in systems such as those that provide push-based communication services. In FIG. 34, the messaging infrastructure 18 facilitates IM communications such as instant messaging between mobile devices 10. IM messaging, such as IMing, is provided by an associated application stored on each mobile device 10, e.g. an IM application 50 as shown in FIG. 8, which can be initiated, for example, by highlighting and selecting an icon from a display as is well known in the art. The IM system 700 routes messages between the mobile devices 10 according to the IM protocol being used. For example, the IM protocol may define a particular way in which to conduct IM or other types of messaging.

In general, in a IM protocol, the sender of the IM message 12, 14 knows the source address of the intended recipient, e.g. a PIN. This may be established when the two devices request to add each other to their respective contact or buddy lists. A particular mobile device 10 can communicate directly with various other mobile devices 10 through the IM system 700 without requiring a dedicated server for facilitating communications. In other words, the IM system 700 enables the mobile devices 10 to communicate with each other directly over the network 16 in accordance with the IM protocol.

When conducting a IM session according to the example shown in FIG. 34, the mobile devices 10a, 10b can communicate directly with the messaging infrastructure 18 in a client based exchange where, as noted above, an intermediate server is not required. A IM message 12, 14 sent by one mobile device 10 is received by the messaging infrastructure 18, which obtains the source address for the intended recipient (or recipients) from information associated with the message 12, 14 (e.g. a data log) or from the message 12,14 itself. After obtaining the recipient's address according to the IM protocol, the messaging infrastructure 18 then routes the message 12, 14 to the recipient associated with the mobile device 10 having such address (or recipients having respective addresses). The messaging infrastructure 18 typically also provides a delivery confirmation to the original sender, which may or may not be displayed to the user. The destination device can also provide such delivery information. The messaging infrastructure 18 may be capable of routing IM messages 12, 14 reliably as well as being capable of holding onto the IM messages 12, 14 until they are successfully delivered. Alternatively, if delivery cannot be made after a certain timeout period, the messaging infrastructure 18 may provide a response indicating a failed delivery. The messaging infrastructure 18 may choose to expire a message 12, 14 if a certain waiting period lapses.

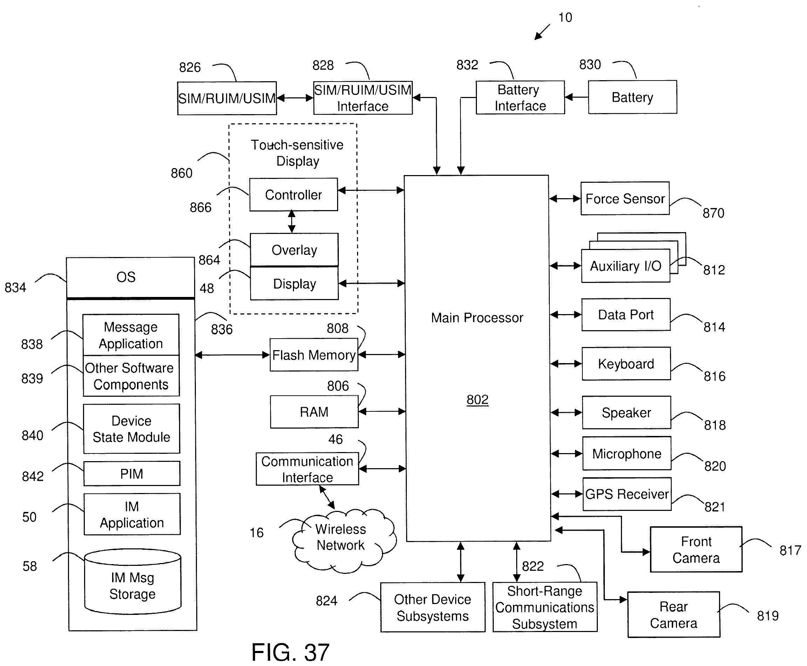

Referring to FIG. 37, to further aid in the understanding of the example mobile devices 10 described above, shown therein is a block diagram of an example configuration of a device configured as a "mobile device", referred to generally as "mobile device 10". The mobile device 10 includes a number of components such as a main processor 802 that controls the overall operation of the mobile device 10. Communication functions, including data and voice communications, are performed through at least one communication interface 46. The communication interface 46 receives messages from and sends messages to a wireless network 12'. In this example of the mobile device 10, the communication interface 46 is configured in accordance with the Global System for Mobile Communication (GSM) and General Packet Radio Services (GPRS) standards, which is used worldwide. Other communication configurations that are equally applicable are the 3G and 4G networks such as Enhanced Data-rates for Global Evolution (EDGE), Universal Mobile Telecommunications System (UMTS) and High-Speed Downlink Packet Access (HSDPA), Long Term Evolution (LTE), Worldwide Interoperability for Microwave Access (Wi-Max), etc. New standards are still being defined, but it is believed that they will have similarities to the network behavior described herein, and it will also be understood by persons skilled in the art that the examples described herein are intended to use any other suitable standards that are developed in the future. The wireless link connecting the communication interface 46 with the wireless network 12' represents one or more different Radio Frequency (RF) channels, operating according to defined protocols specified for GSM/GPRS communications.

The main processor 802 also interacts with additional subsystems such as a Random Access Memory (RAM) 806, a flash memory 808, a touch-sensitive display 860, an auxiliary input/output (I/O) subsystem 812, a data port 814, a keyboard 816 (physical, virtual, or both), a speaker 818, a microphone 820, a GPS receiver 821, a front camera 817, a rear camera 819, short-range communications subsystem 822, and other device subsystems 824. Some of the subsystems of the mobile device 10 perform communication-related functions, whereas other subsystems may provide "resident" or on-device functions. By way of example, the touch-sensitive display 860 and the keyboard 816 may be used for both communication-related functions, such as entering a text message for transmission over the wireless network 12', and device-resident functions such as a calculator or task list. In one example, the mobile device 10 can include a non-touch-sensitive display in place of, or in addition to the touch-sensitive display 860. For example the touch-sensitive display 860 can be replaced by a display 48 that may not have touch-sensitive capabilities.

The mobile device 10 can send and receive communication signals over the wireless network 12' after required network registration or activation procedures have been completed. Network access is associated with a subscriber or user of the mobile device 10. To identify a subscriber, the mobile device 10 may use a subscriber module component or "smart card" 826, such as a Subscriber Identity Module (SIM), a Removable User Identity Module (RUIM) and a Universal Subscriber Identity Module (USIM). In the example shown, a SIM/RUIM/USIM 826 is to be inserted into a SIM/RUIM/USIM interface 828 in order to communicate with a network.

The mobile device 10 is typically a battery-powered device and includes a battery interface 832 for receiving one or more rechargeable batteries 830. In at least some examples, the battery 830 can be a smart battery with an embedded microprocessor. The battery interface 832 is coupled to a regulator (not shown), which assists the battery 830 in providing power to the mobile device 10. Although current technology makes use of a battery, future technologies such as micro fuel cells may provide the power to the mobile device 10.

The mobile device 10 also includes an operating system 834 and software components 836 to 842, 50 and 58. The operating system 834 and the software components 836 to 842, 50 and 58, that are executed by the main processor 802 are typically stored in a persistent store such as the flash memory 808, which may alternatively be a read-only memory (ROM) or similar storage element (not shown). Those skilled in the art will appreciate that portions of the operating system 834 and the software components 836 to 842, 50 and 58, such as specific device applications, or parts thereof, may be temporarily loaded into a volatile store such as the RAM 806. Other software components can also be included, as is well known to those skilled in the art.

The subset of software applications 836 that control basic device operations, including data and voice communication applications, may be installed on the mobile device 10 during its manufacture. Software applications may include a message application 838, a device state module 840, a Personal Information Manager (PIM) 842, an IM application 50, and an IM message storage 58. A message application 838 can be any suitable software program that allows a user of the mobile device 10 to send and receive electronic messages, wherein messages are typically stored in the flash memory 808 of the mobile device 10. A device state module 840 provides persistence, i.e. the device state module 840 ensures that important device data is stored in persistent memory, such as the flash memory 808, so that the data is not lost when the mobile device 10 is turned off or loses power. A PIM 842 includes functionality for organizing and managing data items of interest to the user, such as, but not limited to, e-mail, contacts, calendar events, and voice mails, and may interact with the wireless network 12'.

Other types of software applications or components 839 can also be installed on the mobile device 10. These software applications 839 can be pre-installed applications (i.e. other than message application 838) or third party applications, which are added after the manufacture of the mobile device 10. Examples of third party applications include games, calculators, utilities, etc.

The additional applications 839 can be loaded onto the mobile device 10 through at least one of the wireless network 16', the auxiliary I/O subsystem 812, the data port 814, the short-range communications subsystem 822, or any other suitable device subsystem 824.

The data port 814 can be any suitable port that enables data communication between the mobile device 10 and another computing device. The data port 814 can be a serial or a parallel port. In some instances, the data port 814 can be a Universal Serial Bus (USB) port that includes data lines for data transfer and a supply line that can provide a charging current to charge the battery 830 of the mobile device 10.

For voice communications, received signals are output to the speaker 818, and signals for transmission are generated by the microphone 820. Although voice or audio signal output is accomplished primarily through the speaker 818, the display 48 can also be used to provide additional information such as the identity of a calling party, duration of a voice call, or other voice call related information.

The touch-sensitive display 860 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example, the touch-sensitive display 860 is a capacitive touch-sensitive display which includes a capacitive touch-sensitive overlay 864. The overlay 864 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 48 of the touch-sensitive display 860 may include a display area in which information may be displayed, and a non-display area extending around the periphery of the display area. Information is not displayed in the non-display area, which is utilized to accommodate, for example, one or more of electronic traces or electrical connections, adhesives or other sealants, and protective coatings, around the edges of the display area.

One or more touches, also known as touch contacts or touch events, may be detected by the touch-sensitive display 860. The processor 802 may determine attributes of the touch, including a location of a touch. Touch location data may include an area of contact or a single point of contact, such as a point at or near a center of the area of contact, known as the centroid. A signal is provided to the controller 866 in response to detection of a touch. A touch may be detected from any suitable object, such as a finger, thumb, appendage, or other items, for example, a stylus, pen, or other pointer, depending on the nature of the touch-sensitive display 860. The location of the touch moves as the detected object moves during a touch. One or both of the controller 866 and the processor 802 may detect a touch by any suitable contact member on the touch-sensitive display 860. Similarly, multiple simultaneous touches, are detected.

In some examples, an optional force sensor 870 or force sensors is disposed in any suitable location, for example, between the touch-sensitive display 860 and a back of the mobile device 10 to detect a force imparted by a touch on the touch-sensitive display 860. The force sensor 870 may be a force-sensitive resistor, strain gauge, piezoelectric or piezoresistive device, pressure sensor, or other suitable device.

It will be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 10, messaging infrastructure 18, policy authority 20, enterprise server 32, corporate servers 36, computing devices 38, IM system 700, etc.; any component of or related thereto, or accessible or connectable thereto. Any application or module herein described may be implemented using computer readable/executable instructions that may be stored or otherwise held by such computer readable media.

The steps or operations in the flow charts and diagrams described herein are just for example. There may be many variations to these steps or operations without departing from the principles discussed above. For instance, the steps may be performed in a differing order, or steps may be added, deleted, or modified.

Although the above principles have been described with reference to certain specific examples, various modifications thereof will be apparent to those skilled in the art as outlined in the appended claims.

## Claims

1. A method performed by an electronic device, the method comprising:
sending a shared secret (218) to be sent to a contact to initiate a key exchange to protect messages exchanged in an instant messaging conversation, the shared secret being sent out-of-band using a communication medium other than instant messaging;
after the shared secret has been sent, displaying a pending protected instant messaging conversation user interface (210) prior to receiving a confirmation associated with receipt of the shared secret by the contact, the pending protected instant messaging conversation user interface comprising an option (286) to resend the shared secret;
further comprising displaying at least one notification (302) in the pending protected instant messaging conversation user interface, the at least one notification comprising a status associated with the confirmation of the shared secret; and
further comprising displaying available contact types for selection from a plurality of out-of-band communication channels to send or resend the shared secret (218).

2. The method of claim 1, further comprising displaying at least one further notification (302) after a predetermined amount of time.

3. The method of claim 1, wherein the key exchange is associated with a first security policy.

4. The method of claim 3, wherein the first security policy utilizes a higher level of security than a second security policy.

5. The method of claim 1, further comprising displaying an input field (356) comprising the shared secret.

6. The method of claim 5, wherein the shared secret is automatically populated in the input field. (356)

7. The method of claim 5, wherein the shared secret is editable.

8. The method of claim 1, further comprising displaying at least one notification (420) in a user interface other than the pending protected instant messaging conversation user interface.

9. The method of claim 8, further comprising displaying the pending protected instant messaging conversation user interface after detecting selection of the at least one notification.

10. The method of claim 8, wherein the other user interface (420) provides a list of instant messaging conversations.

11. The method of claim 1, wherein the other user interface (420) provides a list of entries associated with a plurality of applications.

12. The method of claim 1, wherein the shared secret (218) comprises at least one of a pass phrase, a challenge, and a series of values.

13. An electronic device comprising a processor, memory, and a display, the memory comprising computer executable instructions for implementing the method of any of claims 1 to 12.

14. A non-transitory computer readable storage medium comprising computer executable instructions for operating an electronic device, the computer executable instructions comprising instructions for implementing the method of any of claims 1 to 12.

## Patentansprüche

1. Verfahren, das von einer elektronischen Vorrichtung durchgeführt wird, wobei das Verfahren aufweist:
Senden eines gemeinsamen Geheimnisses (218) zum Senden an einen Kontakt, um einen Schlüsselaustausch zu initiieren, um Nachrichten zu schützen, die in einer Instant Messaging-Konversation ausgetauscht werden, wobei das gemeinsame Geheimnis außerhalb des Bandes bzw. Out-of-band unter Verwendung eines anderen Kommunikationsmediums als Instant Messaging gesendet wird;
nachdem das gemeinsame Geheimnis gesendet wurde, Anzeigen einer "anstehende geschützte Instant Messaging-Konversation"-Benutzeroberfläche (210) vor einem Empfangen einer Bestätigung, die mit einem Empfang des gemeinsamen Geheimnisses durch den Kontakt assoziiert ist, wobei die "anstehende geschützte Instant Messaging-Konversation"-Benutzeroberfläche eine Option (286) zum erneuten Senden des gemeinsamen Geheimnisses aufweist;
weiter aufweisend ein Anzeigen zumindest einer Benachrichtigung (302) in der "anstehende geschützte Instant Messaging-Konversation"-Benutzeroberfläche, wobei die zumindest eine Benachrichtigung einen Status aufweist, der mit der Bestätigung des gemeinsamen Geheimnisses assoziiert ist; und
weiter aufweisend ein Anzeigen verfügbarer Kontakttypen zur Auswahl aus einer Vielzahl von Out-of-band-Kommunikationskanälen zum Senden oder erneuten Senden des gemeinsamen Geheimnisses (218).

2. Das Verfahren gemäß Anspruch 1, das weiter ein Anzeigen zumindest einer weiteren Benachrichtigung (302) nach einer vorgegebenen Zeitdauer aufweist.

3. Das Verfahren gemäß Anspruch 1, wobei der Schlüsselaustausch mit einer ersten Sicherheitsrichtlinie assoziiert ist.

4. Das Verfahren gemäß Anspruch 3, wobei die erste Sicherheitsrichtlinie ein höheres Sicherheitsniveau als eine zweite Sicherheitsrichtlinie verwendet.

5. Das Verfahren gemäß Anspruch 1, das weiter ein Anzeigen eines Eingabefeldes (356) aufweist, das das gemeinsame Geheimnis aufweist.

6. Das Verfahren gemäß Anspruch 5, wobei das gemeinsame Geheimnis automatisch in das Eingabefeld (356) eingetragen wird.

7. Das Verfahren gemäß Anspruch 5, wobei das gemeinsame Geheimnis editierbar ist.

8. Das Verfahren gemäß Anspruch 1, das weiter ein Anzeigen zumindest einer Benachrichtigung (420) in einer anderen Benutzeroberfläche als der "anstehende geschützte Instant Messaging-Konversation"-Benutzeroberfläche aufweist.

9. Das Verfahren gemäß Anspruch 8, das weiter ein Anzeigen der "anstehende geschützte Instant Messaging-Konversation"-Benutzeroberfläche nach einem Erfassen der Auswahl der zumindest einen Benachrichtigung aufweist.

10. Das Verfahren gemäß Anspruch 8, wobei die andere Benutzeroberfläche (420) eine Liste von Instant Messaging-Konversationen vorsieht.

11. Das Verfahren gemäß Anspruch 1, wobei die andere Benutzeroberfläche (420) eine Liste von Einträgen vorsieht, die mit einer Vielzahl von Anwendungen assoziiert sind.

12. Das Verfahren gemäß Anspruch 1, wobei das gemeinsame Geheimnis (218) zumindest eines aus einer Passphrase, einer Anforderung und einer Serie von Werten aufweist.

13. Elektronische Vorrichtung, die einen Prozessor, einen Speicher und eine Anzeige aufweist, wobei der Speicher computerausführbare Anweisungen zum Implementieren des Verfahrens gemäß einem der Ansprüche 1 bis 12 aufweist.

14. Ein nicht-transitorisches computerlesbares Speichermedium, das computerausführbare Anweisungen zum Betreiben einer elektronischen Vorrichtung aufweist, wobei die computerausführbaren Anweisungen Anweisungen zum Implementieren des Verfahrens gemäß einem der Ansprüche 1 bis 12 aufweisen.

## Revendications

1. Procédé exécuté par un dispositif électronique, le procédé comprenant de :
envoyer un secret partagé (218) à envoyer à un contact pour amorcer un échange de clés pour protéger les messages échangés dans une conversation de messagerie instantanée, le secret partagé étant envoyé hors bande en utilisant un moyen de communication autre que la messagerie instantanée;
après l'envoi du secret partagé, afficher une interface d'utilisateur de conversation de messagerie instantanée protégée en attente (210) avant de recevoir une confirmation associée à la réception du secret partagé par le contact, l'interface utilisateur de conversation de messagerie instantanée protégée en attente comprenant une option (286) pour renvoyer le secret partagé;
comprenant en outre d'afficher au moins une notification (302) dans l'interface utilisateur de conversation de messagerie instantanée protégée en attente, la au moins une notification comprenant un état associé à la confirmation du secret partagé; et
comprenant en outre d'afficher des types de contact disponibles pour une sélection parmi une pluralité de canaux de communication hors bande pour envoyer ou renvoyer le secret partagé (218).

2. Procédé selon la revendication 1, comprenant en outre l'affichage d'au moins une autre notification (302) après une durée prédéterminée.

3. Procédé selon la revendication 1, dans lequel l'échange de clés est associé à une première politique de sécurité.

4. Procédé selon la revendication 3, dans lequel la première politique de sécurité utilise un niveau de sécurité plus élevé qu'une deuxième politique de sécurité.

5. Procédé selon la revendication 1, comprenant en outre l'affichage d'un champ d'entrée (356) comprenant le secret partagé.

6. Procédé selon la revendication 5, dans lequel le secret partagé est automatiquement renseigné dans le champ d'entrée (356).

7. Procédé selon la revendication 5, dans lequel le secret partagé est modifiable.

8. Procédé selon la revendication 1, comprenant en outre l'affichage d'au moins une notification (420) dans une interface d'utilisateur autre que l'interface d'utilisateur de conversation de messagerie instantanée protégée en attente.

9. Procédé selon la revendication 8, comprenant en outre l'affichage de l'interface utilisateur de conversation de messagerie instantanée protégée en attente après détection de la sélection d'au moins une notification.

10. Procédé selon la revendication 8, dans lequel l'autre interface utilisateur (420) fournit une liste de conversations de messagerie instantanée.

11. Procédé selon la revendication 1, dans lequel l'autre interface utilisateur (420) fournit une liste d'entrées associées à une pluralité d'applications.

12. Procédé selon la revendication 1, dans lequel le secret partagé (218) comprend au moins un parmi une phrase de passe, un défi et une série de valeurs.

13. Dispositif électronique comprenant un processeur, une mémoire et un affichage, la mémoire comprenant des instructions exécutables par ordinateur pour mettre en œuvre le procédé selon une quelconque des revendications 1 à 12.

14. Support de mémorisation non transitoire lisible par ordinateur comprenant des instructions exécutables par ordinateur pour faire fonctionner un dispositif électronique, les instructions exécutables par ordinateur comprenant des instructions pour mettre en œuvre le procédé selon une quelconque des revendications 1 à 12.
